# EUROPÄISCHE PATENTANMELDUNG

(11) **EP 1 983 187 A1**
(43) Veröffentlichungstag der Anmeldung: **22.10.2008**
(21) Anmeldenummer: 08007585.6
(22) Anmeldetag: 18.04.2008
(51) Int. Cl.: F02M 61/14, F16J 15/12

(54) **Dichtelement**

(30) Priorität: 21.04.2007 DE 102007019006
(71) Anmelder: AB SKF, 415 50 Göteborg (SE)
(72) Erfinder: Kurth, Jürgen, 51519 Odenthal (DE)
(74) Vertreter: Kohl, Thomas

(57) **Zusammenfassung**

Gemäß Anspruch 1 beinhaltet ein Dichtelement zum Anordnen zwischen einem ersten und einem zweiten Bauteil, wobei das erste Bauteil eine zylinderartige Höhlung mit einem die Höhlung verengenden stufigen Absatz umfasst, und in der Höhlung das zweite zylinderartig ausgebildete Bauteil zum Anordnen vorgesehen ist, folgende Merkmale:
- Das Dichtelement umfasst einen Versteifungskörper mit einer im wesentlichen L-förmigen Längsschnittfläche, wobei ein erster Schenkel der L-Form zwischen den Mänteln der Höhlung und des zweiten Bauteils sich erstreckend vorgesehen ist und der zweite Schenkel im wesentlichen im Bereich des Absatzes sich zwischen den beiden Bauteilen erstreckend und wenigstens in Teilbereichen zum Berühren des Absatzes und der Stirnseite des zweiten Bauelements vorgesehen ist, und
- das Dichtelement umfasst einen einstückig zusammenhängend ausgebildeten Dichtkörper mit einem ersten Dichtungsbereich zur Anlage an einer tlmfangsfläche des Außenmantels des zweiten Bauteils und mit einem zweiten Dichtungsbereich zur Anlage an einem ringartig umlaufenden Bereich auf der Stirnfläche des Absatzes des ersten Bauteils.

## Beschreibung

Die Erfindung betrifft ein Dichtelement zum Anordnen zwischen einem erstem und einem zweiten Bauteil, wobei das erste Bauteil eine zylinderartige Höhlung mit einem die Höhlung verengenden stufenartigen Absatz umfasst, und in der Höhlung zweite zylinderartig ausgebildete Bauteil zum Anordnen vorgesehen ist.

Beispielsweise aus der DE 100 27 662 A1 ist ein Dichtmittel für ein in eine Aufnahmebohrung eines Zylinderkopfes einer Brennkraftmaschine einsetzbares Brennstoffeinspritzventil zur direkten Einspritzung von Brennstoff in einen Brennraum der Brennkraftmaschine bekannt. Dabei weist das Dichtmittel ein Dichtelement auf, das einen Düsenkörper des Brennstoffeinspritzventils umfänglich umschließt, und umfasst einen Grundkörper, der eine axiale Ausnehmung aufweist, durch die sich der Düsenkörper erstreckt. Der Grundkörper weist ferner eine mit der Ausnehmung verbundene ringförmige Aussparung auf, in die das Dichtelement eingebracht ist. Der Grundkörper liegt mit einer ersten Anlagefläche zumindest mittelbar an einer Stirnfläche des Brennstoffeinspritzventils an, und mit einer zweiten, der ersten Anlagefläche gegenüberliegenden Anlagefläche, zumindest mittelbar an einer Stufe der Auf nahmebohrung an.

Eine Aufgabe der vorliegenden Erfindung besteht darin, ein verbessertes, einfaches und kostengünstiges Dichtelement zur Verfügung zu stellen.

Die Aufgabe wird durch den Gegenstand des Anspruchs 1 gelöst. Vorteilhafte Ausgestaltungen sind in den Unteransprüchen beschrieben.

Gemäß Anspruch 1 beinhaltet ein Dichtelement zum Anordnen zwischen einem ersten und einem zweiten Bauteil, wobei das erste Bauteil eine zylinderartige Höhlung mit einem die Höhlung verengenden stufigen Absatz umfasst, und in der Höhlung das zweite zylinderartig ausgebildete Bauteil zum Anordnen vorgesehen ist, folgende Merkmale:
- Das Dichtelement umfasst einen Versteifungskörper mit einer im wesentlichen L-förmigen Längsschnittfläche, wobei ein erster Schenkel der L-Form zwischen den Mänteln der Höhlung und des zweiten Bauteils sich erstreckend vorgesehen ist und der zweite Schenkel im wesentlichen im Bereich des Absatzes sich zwischen den beiden Bauteilen erstreckend und wenigstens in Teilbereichen zum Berühren des Absatzes und der Stirnseite des zweiten Bauelements vorgesehen ist, und
- das Dichtelement umfasst einen einstückig zusammenhängend ausgebildeten Dichtkörper mit einem ersten Dichtungsbereich zur Anlage an einer Umfangsfläche des Außenmantels des zweiten Bauteils und mit einem zweiten Dichtungsbereich zur Anlage an einem ringartig umlaufenden Bereich auf der Stirnfläche des Absatzes des ersten Bauteils.

Der Vorteil des erfindungsgemäßen Dichtelements besteht darin, dass der Dichtkörper einfacher hergestellt werden kann und sich außerdem leichter an dem Versteifungselement befestigen lässt, so dass sich die Herstellungskosten reduzieren lassen.

In vorteilhaften Ausgestaltungen sind der Versteifungskörper zum unmittelbaren Berühren des Absatzes sowie der Stirnseite des zweiten Bauelements ausgebildet, wobei der Versteifungskörper zwischen dem Berührbereich am Absatz und dem Berührbereich an der Stirnseite des zweiten Bauelements in Achsrichtung mit einer-Federfunktion ausgebildet ist. Damit ist es unter anderem mit Vorteil möglich, das zweite Bauteil in der Höhlung des ersten Bauteils federnd zu lagern.

In weiteren vorteilhaften Ausgestaltungen ist der ringartig umlaufende Bereich des zweiten Dichtungsbereichs des Dichtkörpers radial zu dem Berührbereich des Versteifungskörpers am Absatz beabstandet, insbesondere innerhalb besagten Berührbereichs angeordnet. Damit wird eine auf die Bauteile aufgebrachte Vorspannung ausschließlich durch das Versteifungselement übertragen, wodurch ungünstige Setz- oder Kriechverhalten des Dichtungsmaterials insbesondere im zweiten Dichtungsbereich ausgeschlossen werden.

In einer bevorzugten Ausführungsfrom ist der ringscheibenartige Bereich des Versteifungselements im Bereich des zweiten Schenkels wenigstens an seinem inneren Rand in axialer Richtung durch Vertiefungen und Erhebungen profiliert und der erste und der zweite Dichtungsbereich des Dichtkörpers sind durch Stege miteinander verbunden, die den zweiten Schenkel im Bereich der Vertiefungen umgreifen. Dadurch kann das zweite Bauteil an den Erhebungen des Versteifungselements federnd vorgespannt fest anliegen. Die Verbindung zwischen dem ersten und dem zweiten Dichtungsbereich erfolgt dann durch die Stege, die zwischen dem zweiten Bauteil und dem Versteifungselement im Bereich der Vertiefungen verlaufen und die einstückige Ausbildung des Dichtkörpers und damit auch seine Herstellbarkeit in einem einzigen Spritzgießvorgang gewährleisten.

Besonders bevorzugt ist dabei eine Ausführungsform, bei der die Profilierung wellenförmig ist. Um einen sicheren Sitz des zweiten Bauteils in Bezug auf das Versteifungselement zu gewährleisten, weist die wellenförmige Profilierung wenigstens drei Erhebungen auf.

Vorzugsweise besteht der Dichtkörper aus einem Elastomer, wobei der Dichtkörper beispielsweise in einem einzigen Spritzgießvorgang hergestellt ist. Der Dichtkörper lässt sich dadurch kostengünstig und in großen Stückzahlen herstellen.

Ebenfalls aus diesen Gründen, d. h. im Sinne einer kostengünstigen Herstcllung, die gleichzeitig auch hohe Stückzahlen erlaubt, besteht das Versteifungselement aus einem federnden Metallblech und ist beispielsweise aus gestanztem, gebogenem Blech hergestellt.

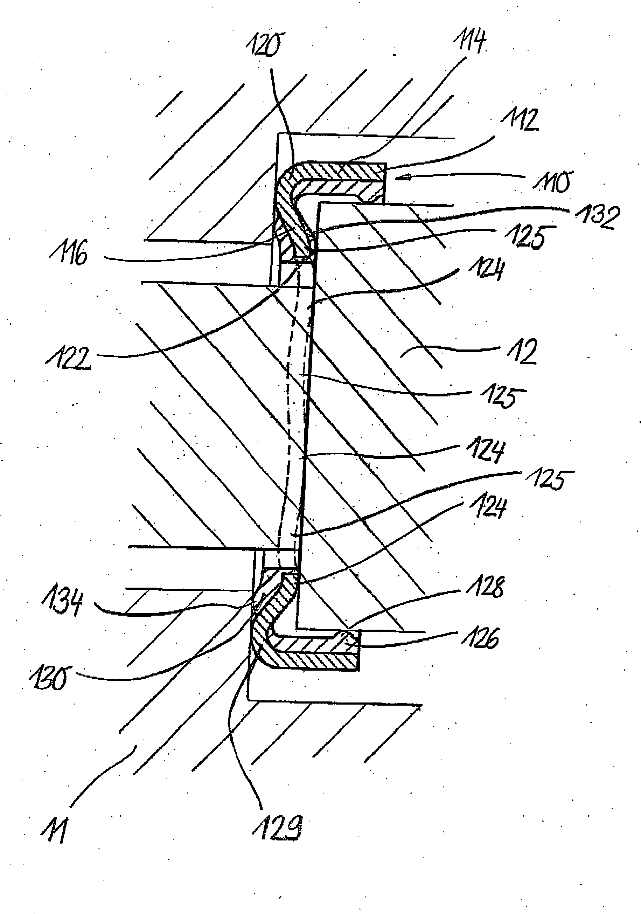

Nachfolgend wird anhand der Figur näher auf ein Ausführungsbeispiel der Erfindung eingegangen.

In der Figur ist ein erfindungsgemäßes Dichtelement 110 in einem Längsschnitt gezeigt. Das Dichtelement 110 ist dabei zwischen einem ersten Bauteil 11 und einem zweiten Bauteil 12 angeordnet, wobei es sich beim ersten Bauteil 11 beispielsweise um einen Zylinderkopf einer Brennkraftmaschine und beim zweiten Bauteil 12 um ein Brennstoffeinspritzventil handeln kann.

Das Dichtelement 110 weist ein ringförmiges Versteifungselement 112 auf, das eine L-förmige Längsschnittfläche mit einem Zylinderabschnitt 114 und einem sich nach innen erstreckenden Flansch 116 umfasst. Das Versteifungselement 112 besteht beispielsweise aus einem federnden Metallblech und ist durch Stanzen hergestellt. Der Zylinderabschnitt 114 geht über einen Biegeradius 120 in den Flansch 116 über. Zur Aufnahme des zweiten Bauteils 12 ist eine mittige Öffnung vorgesehen, die durch einen inneren Rand 122 des Flansches 116 begrenzt ist.

Der Flansch 116 ist an seinem inneren Rand 122 in axialer Richtung durch Erhebungen 124 und Vertiefungen 125 profiliert. Im Ausführungsbeispiel gemäß der Figur ist eine wellenförmige Profilierung gezeigt, bei der die Erhebungen 124 aus Wellenbergen und die Vertiefungen 125 aus Wellentälern bestehen. Die wellenförmige Profilierung des Flansches 116 ist dabei in der Figur durch eine gestrichelte Linie angedeutet.

Zur Abdichtung zwischen dem Versteifungselement 112 und einer Umfangfläche des zweiten Bauteils 12 ist der Zylinderabschnitt 114 auf seiner nach innen gewandten Seite mit einem ersten Dichtungsbereich 126 versehen. Dazu ist zur Ausbildung einer Art radial umlaufenden Dichtungslippe der erste Dichtungsbereich 126 mit einem Vorsprung 128 ausgebildet.

Zur Abdichtung des Versteifungselements 112 gegenüber dem ersten Bauteil 11 ist der Flansch 116 auf seiner dem ersten Dichtungsbereich 126 abgewandten Seite mit einem zweiten Dichtungsbereich 130 versehen. Dabei ist zur Abdichtung des Versteifungselements 112 gegenüber dem ersten Bauteil 11 und damit der beiden Bauteilen 11 und 12 gegeneinander der zweite Dichtungsbereich 130 mit einem eine Art Dichtlippe ausbildenden, ringartig umlaufenden, axialen Vorsprung 134 versehen.

Der erste und der zweite Dichtungsbereich 126 und 130 sind als einstückiger Dichtkörper ausgebildet. Dazu sind Stege 132 vorgesehen, die den Flansch 116 und dessen inneren Rand 122 umgreifen und dadurch den ersten Dichtungsbereich 126 mit dem zweiten Dichtungsbereich 130 verbinden. Die Stege 132 sind jedoch nur im Bereich der Vertiefungen 125 vorgesehen, so dass der Absatz des zweiten Bauteils 12 an den Erhebungen 124 fest anliegen kann, womit über die Schulter 129 des Versteifungselementes 112 die beiden Bauteile 11 und 12 federnd gegeneinander vorspannbar sind.

Da die Stege 132 mit dem daran angeschlossenen ersten 126 und zweiten Dichtungsbereich 130 den Flansch 116 umgreifen, sind der erste Dichtungsbereich 126 und der zweite Dichtungsbereich 130 sicher am Versteifungselement 112 gehalten, womit der beispielsweise aus einem Elastomer bestehende Dichtkörper mit Vorteil in einem einzigen Spritzgießvorgang herstellbar ist.

## Patentansprüche

1. Dichtelement zum Anordnen zwischen einem ersten und einem zweiten Bauteil, wobei das erste Bauteil eine zylinderartige Höhlung mit einem die Höhlung verengenden stufenartigen Absatz umfasst, und in der Höhlung das zweite zylinderartig ausgebildete Bauteil zum Anordnen vorgesehen ist, beinhaltend folgende Merkmale:
- Das Dichtelement umfasst einen Versteifungskörper mit einer im wesentlichen L-förmigen Längsschnittfläche, wobei ein erster Schenkel der L-Form zwischen den Mänteln der Höhlung und des zweiten Bauteils sich erstreckend vorgesehen ist und der zweite Schenkel im wesentlichen im Bereich des Absatzes sich zwischen den beiden Bauteilen erstreckend und wenigstens in Teilbereichen zum Berühren des Absatzes und der Stirnseite des zweiten Bauelements vorgesehen ist, und
- das Dichtelement umfasst einen einstückig zusammenhängend ausgebildeten Dichtkörper mit einem ersten Dichtungsbereich zur Anlage an einer Umfangsfläche des Außenmantels des zweiten Bauteils und mit einem zweiten Dichtungsbereich zur Anlage an einem ringartig umlaufenden Bereich auf der stirnfläche des Absatzes des ersten Bauteils.

2. Dichtelement nach Anspruch 1, wobei der Versteifungskörper zum unmittelbaren Berühren des Absatzes und/oder der Stirnseite des zweiten Bauelements ausgebildet ist.

3. Dichtelement nach einem der Ansprüche 1 oder 2, wobei der Versteifungskörper zwischen dem Berührbereich am Absatz und dem Berührbercich an der Stirnseite des zweiten Bauelements in Achsrichtung mit einer Federfunktion ausgebildet ist.

4. Dichtelement nach einem der Ansprüche 1 bis 3, wobei der ringartig umlaufende Bereich des zweiten Dichtungsbereichs des Dichtkörpers radial zu dem Berührbereich des Versteifungskörpers am Absatz beabstandet angeordnet ist.

5. Dichtelement nach einem der Ansprüche 1 bis 4, wobei der ringartig umlaufende Bereich des zweiten Dichtungsbereichs des Dichtkörpers radial innerhalb des Berührbereichs des Versteifungskörpers am Absatz angeordnet ist.

6. Dichtelement nach einem der Ansprüche 1 bis 5, wobei im unbelasteten Zustand des Dichtelements der ringartig umlaufende Bereich des zweiten Dichtungsbereichs des Dichtkörpers axial in Richtung zum Absatz hin über den Berührbereich des Versteifungskörpers am Absatz überstehend ausgebildet ist.

7. Dichtelement nach einem der Ansprüche 1 bis 6, wobei der zweite Schenkel wenigstens an seinem inneren Rand in axialer Richtung durch Vertiefungen und Erhebungen profiliert ist und der erste und der zweite Dichtungsbereich des Dichtkörpers durch Stege miteinander verbunden sind, die den zweiten Schenkel im Bereich der Vertiefungen umgreifen.

8. Dichtelement nach Anspruch 7, wobei die Profilierung wellenförmig ist.

9. Dichtelement nach Anspruch 8, wobei die wellenförmige Profilierung wenigstens drei Erhebungen aufweist.

10. Dichtelement nach einem der Ansprüche 1 bis 9, wobei der erste Dichtungsbcreich mit einem radial umlaufenden, radial nach innen hin auskragenden Vorsprung ausgebildet ist.

11. Dichtelement nach einem der Ansprüche 1 bis 10, wobei der zweite Dichtungsbereich mit einem radial umlaufenden, axial auskragenden Vorsprung ausgebildet ist.

12. Dichtelement nach einem der Ansprüche 1 bis 11, wobei der Dichtkörper aus einem Elastomer besteht.

13. Dichtelement nach einem der Ansprüche 1 bis 12, wobei der Dichtkörper n einem einzigen Spritzgießvorgang hergestellt ist.

14. Dichtelement nach einem der Ansprüche 1 bis 13, wobei das Versteifungselement aus einem Metallblech ausgebildet ist.

15. Dichtelement nach Anspruch 14, wobei das Versteifungselement aus gestanztem, gebogenem Blech hergestellt ist.
